# EUROPÄISCHE PATENTSCHRIFT

(11) **EP 2 752 236 B1**
(45) Veröffentlichungstag und Bekanntmachung des Hinweises auf die Patenterteilung: **09.11.2016**
(21) Anmeldenummer: 14000029.0
(22) Anmeldetag: 06.01.2014
(51) Int. Cl.: B01F 15/00, B01F 7/16, B01F 15/02, B01F 3/12, C02F 1/68, C02F 1/76, C02F 103/42

(54) **Vorrichtung zum Dosieren zumindest einer Chemikalie in ein flüssiges Medium, insbesondere einer Chlorverbindung im Wasser**
Device for metering at least one chemical into a liquid medium, in particular a chlorine compound in water
Dispositif de dosage d'au moins un produit chimique dans un produit liquide, notamment d'un composé chloré dans l'eau

(30) Priorität: 04.01.2013 DE 202013000063 U
(43) Veröffentlichungstag der Anmeldung: 09.07.2014
(73) Patentinhaber: MEREDOTEC Germany GmbH, 26160 Bad Zwischenahn (DE)
(72) Erfinder: Egon Lüers, 26160 Bad Zwischenahn (DE)
(74) Vertreter: Jabbusch, Matthias

(56) Entgegenhaltungen:
- DE-A1- 3 207 437
- DE-C1- 3 543 052
- DE-U1- 29 917 369
- DE-U1-202005 000 343
- DE-U1-202008 010 638
- US-A- 4 107 789
- US-A1- 2009 175 123

## Beschreibung

Die Erfindung betrifft eine Vorrichtung entsprechend Anspruch 1 zum Dosieren zumindest einer Chemikalie in ein flüssiges Medium, insbesondere einer Chlorverbindung in Wasser, umfassend zumindest einen Behälter für das flüssige Medium.

Zu verschiedenen Zwecken sind Chemikalien in flüssige Medien einzudosieren. Die Chemikalien liegen häufig in Pulverform vor, die sind in das flüssige Medium einzubringen und dort gleichmäßig zu verteilen.

Bei derartigen Chemikalien kann es sich zum Beispiel um Aktivkohlepulver oder Kalziumhypochlorit handeln, welche zur Chlorierung von zum Bespiel Schwimmbadwasser eingesetzt werden. Diese Stoffe werden als Ersatz für Chlor-Gas eingesetzt. Problematisch ist, dass die nunmehr eingesetzten Stoffe als Granulate vorliegen, welche Kalke enthalten. Die Dosierung ist schwierig, es droht das Verstopfen von Leitungen. Weiterhin ist eine Staubentwicklung bei offener Handhabung zu beobachten.

DE 299 17 369 U1 offenbart eine Vorrichtung entsprechend dem Oberbegriff des Anspruchs 1.

Der Erfindung liegt die Aufgabe zugrunde, eine Vorrichtung der eingangs genannten Gattung aufzuzeigen, mit der die Chemikalie in einfacher und unproblematischer Weise zuführbar ist.

Diese Aufgabe ist durch eine Vorrichtung entsprechend Anspruch 1.

Das eine Gebinde der Chemikalie oder auch Gebinde mehrerer Chemikalien werden jeweils in einer Aufnahmeeinrichtung aufgenommen. Die Aufnahmeeinrichtung nimmt das Gebinde auf, weiterhin hat sie ein Annäherungsorgan für das Gebinde an den Behälter heran. Mit der Aufnahmeeinrichtung wird das Gebinde an den Behälter herangeführt. Weiterhin ist ein sowohl mit dem Gebinde als auch mit dem Behälter in Wirkverbindung bringbares Schließelement vorgesehen. Das Schließelement wird vorzugsweise zunächst mit dem Gebinde in Wirkverbindung gebracht, anschließend kann es im noch geschlossenen Zustand mit dem Behälter in Wirkverbindung gebracht werden. Ein Öffnen des Schließelementes ermöglicht dann eine Zuführung des Gebindeinhaltes in den Behälter, Staub tritt dabei nicht auf.

Die Aufnahmeeinrichtung ist vorzugsweise an den Behälter angesetzt. Damit ist sie dem Behälter lagegerecht zuordbar, sie ist zudem unverlierbar. Mehrere Aufnahmeeinrichtungen können nebeneinander angeordnet sein.

Das erfindungsgemäß vorgesehene Annäherungsorgan umfasst eine Kippaufnahme für das Gebinde. Das Gebinde ist in die Aufnahmeeinrichtung einstellbar, anschließend kann es mit der Kippaufnahme in Richtung Behälter gekippt werden. Dabei erfolgt ein Überkopfstellen des Gebindes, so dass dieses vollständig entleert werden kann.

Das Schließelement ist ein Kugelhahn mit Anschlüssen für den Behälter und für das Gebinde. Der Kugelhahn kann im geschlossenen Zustand an Gebinde und Behälter angebracht werden, anschließend wird durch sein Öffnen das Einführen des Gebindeinhaltes in den Behälter ermöglicht. Das Gebinde kann dabei ein Fass, Eimer bzw. Kanister mit einer obenliegenden Befüll- und Entnahmeöffnung sein.

Zur weiteren Ausbildung der Erfindung ist vorgesehen, dass im Behälter zumindest ein Rührwerk angeordnet ist. Dieses Rührwerk ist vorzugsweise ohne Unterbrechung in Betrieb, es verrührt die zugeführten Chemikalien in dem Medium. Der Behälter hat dabei vorzugsweise etwa eine Quaderform, dadurch werden im Behälter turbulente Strömungsverhältnisse ausgebildet.

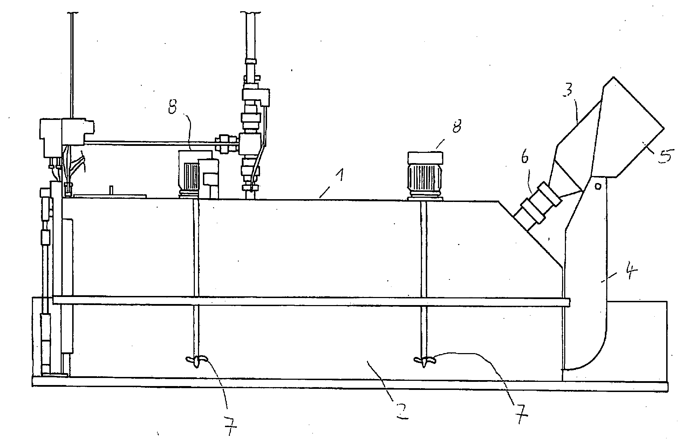

Ein Ausführungsbeispiel der Erfindung, aus dem sich weitere Merkmale ergeben, ist in der Zeichnung dargestellt. Die einzige Figur der Zeichnung zeigt eine Schnittansicht einer erfindungsgemäßen Vorrichtung zum Dosieren zumindest einer Chemikalie in ein flüssiges Medium.

Die Vorrichtung hat einen etwa quaderförmigen Behälter 1 für ein flüssiges Medium 2. In dieses Medium 2 hinein soll der Inhalt eines Fasses, Eimers bzw. Kanisters 3, das in einer Aufnahmeeinrichtung 4 aufgenommen ist, eingeführt werden. Die Aufnahmeeinrichtung 4 hat eine Kippaufnahme 5, in welche das Fass, Eimer bzw. Kanister 3 eingestellt ist.

Der Anschluss des Fasses, Eimers bzw. Kanisters 3 an dem Behälter 1 erfolgt über einen Kugelhahn 6. Dieser ist zunächst mit dem Fass, Eimer bzw. Kanister 3 verbunden worden, noch im geschlossenen Zustand des Kugelhahns 6 erfolgte dann die Verbindung mit dem Behälter 1. Nach Öffnen des Kugelhahns 6 ist der Inhalt des Fasses, Eimers bzw. Kanisters 3 in das Medium 2 im Behälter 1 einführbar.

Im Behälter befinden sich noch Rührwerke 7, welche auf das Medium einwirken. Die Rührwerke 7 werden über Elektromotoren 8 angetrieben.

## Patentansprüche

1. Vorrichtung zum Dosieren zumindest einer in einem Gebinde aufgenommenen Chemikalie in ein flüssiges Medium, insbesondere einer Chlorverbindung in Wasser, umfassend zumindest einen Behälter für das flüssige Medium, wobei
dem Behälter (1) wenigstens eine Aufnahmeeinrichtung (4) für das Gebinde der Chemikalie zugeordnet ist, dass die Aufnahmeeinrichtung (4) ein Annäherungsorgan für das Gebinde an den Behälter (1) sowie ein sowohl mit dem Gebinde als auch mit dem Behälter (4) in Wirkverbindung bringbares Schließelement hat, wobei das Annäherungsorgan eine Kippaufnahme (5) für das Gebinde umfasst, **dadurch gekennzeichnet, dass** das Schließelement ein Kugelhahn (6) mit Anschlüssen für den Behälter (1) und für das Gebinde ist, so dass der Kugelhahn (6) an das Gebinde und den Behälter (4) angebracht werden kann.

2. Vorrichtung nach Anspruch 1, **dadurch gekennzeichnet, dass** die Aufnahmeeinrichtung (4) an den Behälter (1) angesetzt ist.

3. Vorrichtung nach einem der vorhergehenden Ansprüche, **dadurch gekennzeichnet, dass** das Gebinde ein Fass, Eimer bzw. Kanister (3) ist.

4. Vorrichtung nach einem der vorhergehenden Ansprüche, **dadurch gekennzeichnet, dass** im Behälter (1) zumindest ein Rührwerk (7) angeordnet ist.

5. Vorrichtung nach einem der vorhergehenden Ansprüche, **dadurch gekennzeichnet, dass** der Behälter (1) etwa eine Quaderform hat.

## Claims

1. Device for metering at least one chemical contained in a receptacle into a liquid medium, more particularly a chlorine compound into water, comprising a least one container for the liquid medium wherein assigned to the container (1) is a least one holder device (4) for the receptacle of the chemical, the holder device (4) has an element for bringing the receptacle in proximity with the container (1) and closing element that can be brought into functional connection with both the receptacle and the container (1), wherein the proximity element comprises a tipping holder (5) for the receptacle, **characterised in that** the closing element is a ball valve (6) with connections for the container (1) and for the receptacle so that the ball valve (6) can be attached to the drum and the container (4).

2. Device according to claim 1 **characterised in that** the holder device (4) is applied to the container (1).

3. Device according to any one of the preceding claims **characterised in that** the receptacle is a barrel, bucket or canister (3).

4. Device according to any one of the preceding claims **characterised in that** at least one stirring mechanism (7) is arranged in the container (1).

5. Device according to any one of the preceding claims **characterised in that** the container (1) is approximately cuboid in shape.

## Revendications

1. Dispositif destiné à doser dans un milieu liquide au moins un produit chimique contenu dans un contenant, notamment un composé chloré dans de l'eau, comportant au moins un récipient pour le milieu liquide, au récipient (1) étant associé au moins un système de réceptacle (4) pour le contenant du produit chimique, le système de réceptacle (4) présentant au moins un organe d'approche du contenant vers le récipient (1), ainsi qu'un élément de fermeture pouvant être amené en liaison active aussi bien avec le contenant qu'également avec le récipient (4), l'organe d'approche comportant un logement basculant (5) pour le contenant, **caractérisé en ce que** l'élément de fermeture est un robinet à boisseau sphérique (6) avec des raccords pour le récipient (1) et pour le contenant, de sorte que le robinet à boisseau sphérique (6) puisse être monté sur le contenant et sur le récipient.

2. Dispositif selon la revendication 1, **caractérisé en ce que** le système de réceptacle (4) est ajusté au récipient (1).

3. Dispositif selon l'une quelconque des revendications précédentes, **caractérisé en ce que** le contenant est un fût, un seau ou un bidon (3).

4. Dispositif selon l'une quelconque des revendications précédentes, **caractérisé en ce que** dans le récipient (1) est placé au moins un agitateur (7).

5. Dispositif selon l'une quelconque des revendications précédentes, **caractérisé en ce que** le récipient (1) a une forme approximativement parallélépipédique.
